# EUROPEAN PATENT APPLICATION

(11) **EP 4 641 857 A1**
(43) Date of publication of application: **29.10.2025**
(21) Application number: 25166887.7
(22) Date of filing: 28.03.2025
(51) Int. Cl.: H02H 3/18, H02H 3/00, H02H 7/12, H02H 11/00

(54) **POWER-SIDE SHUTDOWN PROTECTION METHOD FOR POWER CONVERSION CIRCUIT, POWER CONVERTER, COMBINER BOX, AND POWER CONVERSION SYSTEM**

(30) Priority: 28.04.2024 CN 202410533462
(71) Applicant: Sungrow Power Supply Co., Ltd., Hefei, Anhui 230088 (CN)
(72) Inventor: WANG, Hao, 230088 Hefei (CN); CHEN, Changchun, 230088 Hefei (CN); CAO, Jinhu, 230088 Hefei (CN); PAN, Nianan, 230088 Hefei (CN); LI, Wei, 230088 Hefei (CN); CHEN, Yu, 230088 Hefei (CN)
(74) Representative: Epping - Hermann - Fischer

(57) **Abstract**

The present disclosure relates to the technical field of power electronics, and a power-side shutdown protection method for a power conversion circuit, a power converter, a combiner box, and a power conversion system are provided. With the power-side shutdown protection method, the DC/DC conversion circuit connected to the DC power supply with a reverse current is determined as a target DC/DC conversion circuit, and a positive electrode and a negative electrode at the power side of the target DC/DC conversion circuit are short circuited to provide another current circuit for some reverse currents, thereby reducing a turn-off current of a switch connected to the DC power supply with the reverse currents. A switch connected to the target DC/DC conversion circuit is controlled to be turned off to reduce the reverse current while reducing the risk of shutdown. Then, only in a case of determining the switch controlled to be turned off is actually turned off, the positive electrode and the negative electrode at the power side of the target DC/DC conversion circuit are stopped being short circuited, thereby avoiding not effectively reducing the reverse current after stopping short circuiting the positive electrode and the negative electrode at the power side of the target DC/DC conversion circuit due to the turn-off fault of the switch.

## Description

### FIELD

The present disclosure relates to the technical field of power electronics, and in particular to a power-side shutdown protection method for a power conversion circuit, a power converter, a combiner box, and a power conversion system.

### BACKGROUND

A power converter, such as an inverter, is usually arranged with a switch at a power side, which is a side of the power converter connected to a direct-current (DC) power supply. In a case of abnormal operation conditions, such as reverse connection, reverse injection or multi-point grounding, at the power side, a reverse current may flow through a corresponding DC power supply. Especially for a structure of multiple DC power supplies connected in parallel and then connected to the power side, a large reverse current may be generated, resulting in damage to the DC power supply and even serious consequences such as fires.

### SUMMARY

In view of this, a power-side shutdown protection method for a power conversion circuit, a power converter, a combiner box, and a power conversion system are provided according to the present disclosure, to actively disconnect the connection between the power side and the DC power supply in a case of abnormal operation conditions, such as reverse connection, reverse injection or multi-point grounding, at the power side, thereby realizing shutdown protection.

Therefore, following technical solutions are provided according to the present disclosure.

In a first aspect of the present disclosure, a power-side shutdown protection method for a power conversion circuit is provided. Direct-current/direct-current (DC/DC) conversion circuits in the power conversion circuit are connected to multiple external DC power supplies through corresponding switches. The power-side shutdown protection method includes: determining a DC/DC conversion circuit connected to a DC power supply with a reverse current as a target DC/DC conversion circuit, and short circuiting a positive electrode and a negative electrode at a power side of the target DC/DC conversion circuit; controlling a switch connected to the target DC/DC conversion circuit to be turned off; determining whether the switch controlled to be turned off is actually turned off; and stopping short circuiting the positive electrode and the negative electrode at the power side of the target DC/DC conversion circuit in a case that the switch is actually turned off.

In an embodiment, the determining whether the switch controlled to be turned off is actually turned off includes: determining whether a current at the power side of the target DC/DC conversion circuit is less than a predetermined current value; and determining that the switch controlled to be turned off is actually turned off in a case that the current at the power side of the target DC/DC conversion circuit is less than the predetermined current value.

In an embodiment, the determining whether the switch controlled to be turned off is actually turned off includes: determining whether an absolute value of at least one current in currents of a DC power supply connected to the switch controlled to be turned off is less than a predetermined current value; and determining that the switch controlled to be turned off is actually turned off in a case that the absolute value of the at least one current in the currents of the DC power supply connected to the switch controlled to be turned off is less than the predetermined current value.

In an embodiment, the determining whether the switch controlled to be turned off is actually turned off includes: determining whether a state signal of the switch controlled to be turned off meets a predetermined turn-off condition; and determining that the switch controlled to be turned off is actually turned off in a case that the state signal of the switch controlled to be turned off meets the predetermined turn-off condition.

In an embodiment, the state signal is a feedback signal, and the predetermined turn-off condition is that the feedback signal indicates that the switch operates in a turn-off state.

In an embodiment, the state signal is a temperature monitoring signal, and the predetermined turn-off condition is that the temperature monitoring signal indicates that a temperature of the switch is lower than a predetermined temperature.

In an embodiment, the determining whether the switch controlled to be turned off is actually turned off includes: determining whether a temperature of the target DC/DC conversion circuit decreases; and determining that the switch controlled to be turned off is actually turned off in a case that the temperature of the target DC/DC conversion circuit decreases.

In an embodiment, the short circuiting a positive electrode and a negative electrode at a power side of the target DC/DC conversion circuit includes: controlling a switching transistor arranged between the positive electrode and the negative electrode at the power side of the target DC/DC conversion circuit to be turned on.

In an embodiment, before short circuiting the positive electrode and the negative electrode at the power side of the target DC/DC conversion circuit, the method further includes: determining whether a reverse current having an absolute value greater than a protection threshold exists in currents of the DC power supplies; and determining a DC power supply corresponding to the reverse current as the DC power supply with the reverse current in a case that the reverse current having the absolute value greater than the protection threshold exists in the currents of the DC power supplies.

In an embodiment, after controlling the switch connected to the target DC/DC conversion circuit to be turned off, the method further includes: determining, after a first predetermined time period, whether the switch controlled to be turned off is actually turned off.

In an embodiment, after short circuiting the positive electrode and the negative electrode at the power side of the target DC/DC conversion circuit, the method further includes: controlling, after a second predetermined time period, the switch connected to the target DC/DC conversion circuit to be turned off.

In an embodiment, after determining whether the switch controlled to be turned off is actually turned off, the method further includes: maintaining short circuiting the positive electrode and the negative electrode at the power side of the target DC/DC conversion circuit in a case that the switch controlled to be turned off is not actually turned off.

In a second aspect of the present disclosure, a power converter is provided. The power converter includes: a controller, a power conversion circuit, and multiple switches. The power conversion circuit includes at least one direct-current/direct-current (DC/DC) conversion circuit. Each of a positive electrode and a negative electrode at a power side of the target DC/DC conversion circuit is connected to one terminal of at least one switch, and the other terminal of the switch is connected to a corresponding electrode of at least one DC power supply. The power conversion circuit and the multiple switches are configured to be controlled by the controller. The controller is configured to perform the power-side shutdown protection method for a power conversion circuit described in the first aspect.

In an embodiment, the power conversion circuit further includes: a direct-current/alternating-current (DC/AC) conversion circuit. A bus side of the DC/DC conversion circuit is connected to a DC side of the DC/AC conversion circuit through a DC bus.

In a third aspect of the present disclosure, a combiner box is provided. The combiner box includes: a controller, a power conversion circuit, and multiple switches. The power conversion circuit includes at least one direct-current/direct-current (DC/DC) conversion circuit. Each of a positive electrode and a negative electrode at a power side of the target DC/DC conversion circuit is connected to one terminal of at least one switch, and the other terminal of the switch is connected to a corresponding electrode of at least one DC power supply. The power conversion circuit and the multiple switches are configured to be controlled by the controller. The controller is configured to perform the power-side shutdown protection method for a power conversion circuit described in the first aspect.

In a fourth aspect of the present disclosure, a power conversion system is provided. The power conversion system includes: at least one power converter; or at least one direct-current/alternating-current (DC/AC) converter and at least one combiner box connected to a DC side of the at least one DC/AC converter. The at least one power converter is the power converter described in the second aspect. The combiner box is the combiner box described in the third aspect.

With the power-side shutdown protection method for a power conversion circuit according to the present disclosure, the DC/DC conversion circuit connected to the DC power supply with a reverse current is determined as a target DC/DC conversion circuit, and a positive electrode and a negative electrode at the power side of the target DC/DC conversion circuit are short circuited to provide another current circuit for some reverse currents, thereby reducing a turn-off current of a switch connected to the DC power supply with the reverse currents. A switch connected to the target DC/DC conversion circuit is controlled to be turned off to reduce the reverse current while reducing the risk of shutdown. Then, only in a case of determining the switch controlled to be turned off is actually turned off, the positive electrode and the negative electrode at the power side of the target DC/DC conversion circuit are stopped being short circuited, thereby avoiding not effectively reducing the reverse current after stopping short circuiting the positive electrode and the negative electrode at the power side of the target DC/DC conversion circuit due to the turn-off fault of the switch.

### BRIEF DESCRIPTION OF THE DRAWINGS

In order to more clearly illustrate technical solutions in the embodiments of the present disclosure or in the relational technology, the drawings to be used in the description of the embodiments or the relational technology are briefly described below. Apparently, the drawings in the following description show only some embodiments of the present disclosure, and other drawings may be obtained by those skilled in the art from the drawings without any creative effort.
FIG. 1 is a schematic diagram of a connection structure at a power side of a BOOST circuit in a string photovoltaic inverter according to an embodiment of the present disclosure;
FIG. 2 is a schematic diagram of current paths after all switches are turned off based on the connection structure shown in FIG. 1;
FIG. 3 is a schematic diagram of current paths after a positive electrode and a negative electrode at a power side of a BOOST circuit are short circuited based on the connection structure shown in FIG 1;
FIG. 4 is a flowchart of a power-side shutdown protection method for a power conversion circuit according to an embodiment of the present disclosure;
FIG. 5 is a schematic structural diagram of a power converter or a combiner box according to an embodiment of the present disclosure; and
FIG. 6 is a schematic structural diagram of a power converter according to an embodiment of the present disclosure.

### DETAILED DESCRIPTION

The technical solutions according to the embodiments of the present disclosure will be described clearly and completely as follows in conjunction with the drawings in the embodiments of the present disclosure. It is apparent that the described embodiments are only some of the embodiments according to the present disclosure, rather than all the embodiments. Any other embodiments obtained by those skilled in the art based on the embodiments of the present disclosure without any creative work fall within the protection scope of the present disclosure.

In this application, the terms "include", "comprise" or any other variants thereof are intended to encompass non-exclusive inclusion, such that a process, a method, an article or a device including a series of elements include not only these elements but also other elements that are not explicitly listed, or further include elements inherent in the process, method, article or device. Unless expressively limited, the statement "including a..." does not exclude the case that other similar elements may exist in the process, method, article or device including the series of elements.

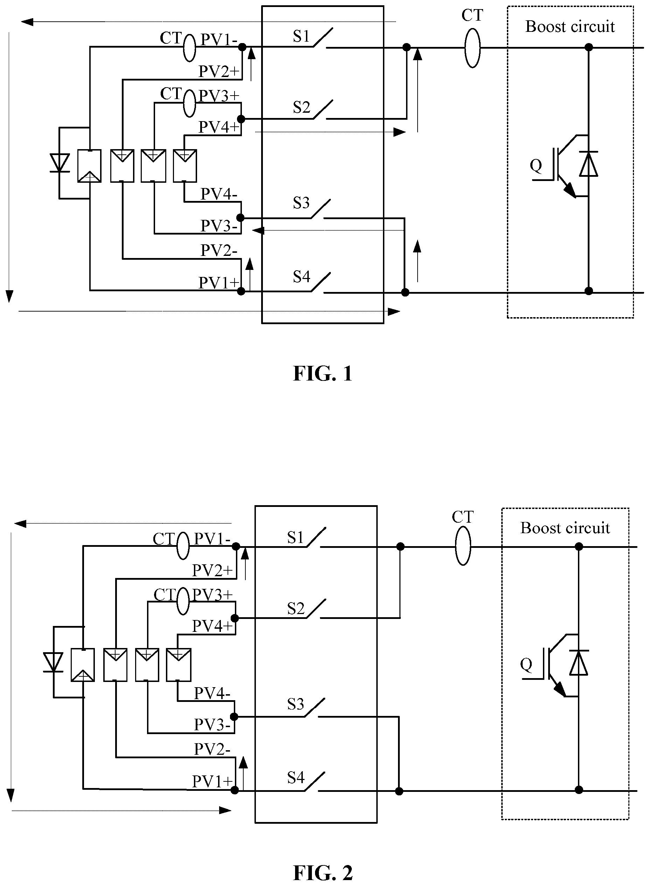

FIG. 1 shows a connection structure at a power side of a BOOST circuit in a string photovoltaic inverter. As shown in FIG. 1, the power side of the BOOST circuit is connected to multiple photovoltaic strings (PV1 to PV4 shown in FIG. 1) through multiple switches (S1 to S4 shown in FIG. 1).

For a normal connection based on the structure shown in FIG. 1, photovoltaic strings PV1 and PV2 are connected in parallel, a positive electrode of PV1 and PV2 connected in parallel is connected to a positive electrode of the power side of the BOOST circuit through a switch S1, and a negative electrode of PV1 and PV2 connected in parallel is connected to a negative electrode of the power side of the BOOST circuit through a switch S4; and photovoltaic strings PV3 and PV4 are connected in parallel, a positive electrode of PV3 and PV4 connected in parallel is connected to the positive electrode of the power side of the BOOST circuit through a switch S2, and a negative electrode of PV3 and PV4 connected in parallel is connected to the negative electrode of the power side of the BOOST circuit through a switch S3.

FIG. 1 shows a situation in which the photovoltaic string PV1 is reversely connected. In this situation, a current of the photovoltaic string PV2 reversely flows to the photovoltaic string PV1 through a parallel-connection point, and currents of the photovoltaic strings PV3 and PV4 reversely flow to the photovoltaic string PV1 through the switch show in FIG. 1. Therefore, circuits are formed through a bypass diode (equivalent to the anti-parallel diode of the photovoltaic string PV1 shown in FIG. 1) in the photovoltaic string PV1. Flow paths of the reverse current are shown by dotted lines with arrows in FIG. 1. In practical applications, the power side of the BOOST circuit may be connected to more switches and more photovoltaic strings, that is, a greater reverse current may be generated, resulting in damage to photovoltaic modules and even serious consequences such as fires.

In addition, abnormal operation conditions, such as reverse injection of a photovoltaic string having a lowest voltage due to a voltage difference between the photovoltaic strings connected to the power side of the BOOST circuit or multi-point grounding at the power side of the BOOST circuit, may result in a reverse current. Moreover, more photovoltaic strings connected to the BOOST circuit indicate a greater reverse current and a more severe consequence.

To avoid the above problems, a DC switch having active shutdown capability may be arranged at the power side of the string photovoltaic inverter. The DC switch includes the switches mentioned above. Thus, in a case of abnormal operation conditions such as reverse connection, reverse injection and multi-point grounding, the DC switch is controlled to perform active shutdown protection to disconnect the reverse current input circuits of other photovoltaic strings. Based on FIG. 1, FIG. 2 shows a situation in which reverse current input circuits of the photovoltaic strings PV3 and PV4 are disconnected by controlling the DC switch to be turned off.

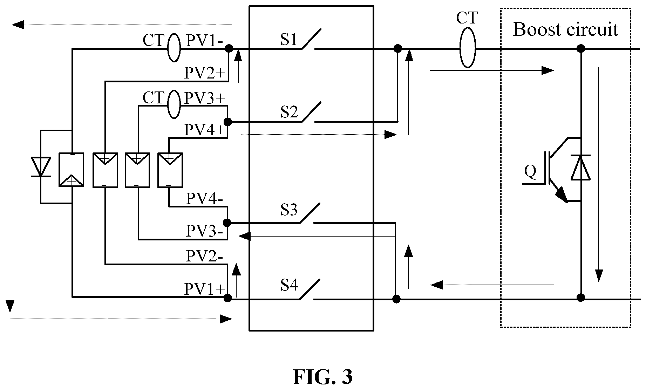

However, with the current paths shown in FIG. 1, when the DC switch is turned off, the switch corresponding to the reverse branch (that is, the switches S1 and S4 corresponding to the photovoltaic string PV1) has a large turn-off current, resulting in a high turning-off risk. To reduce the turn-off current of the switch, all switching transistors (such as the switching transistor Q shown in FIG. 1) in the BOOST circuit connected to the photovoltaic string with the reverse current (such as the photovoltaic string PV1 shown in FIG. 1) may be turned on before turning off the DC switch, so that currents of the photovoltaic strings (such as the photovoltaic strings PV3 and PV4 shown in FIG. 1) connected to the BOOST circuit flow through the switching transistors turned on in the BOOST circuit as shown in FIG. 3. Thus, shutdown currents of switches S1 and S4 connected to the reversely connected photovoltaic string PV1 are greatly reduced.

However, in a case that the DC switch fails or a driving circuit of the DC switch fails, although the controller transmits a turn-off command to the DC switch, the DC switch is not to be turned off and remains in a turn-on state. In this case, after the switching transistor in the BOOST circuit is turned off, the current paths at the power side remain the same paths shown in FIG. 1, and the risk of damage to the photovoltaic modules still exists.

Therefore, a power-side shutdown protection method for a power conversion circuit is provided according to the present disclosure, to actively disconnect the connection between the power side and the DC power supply in a case of abnormal operation conditions, such as reverse connection, reverse injection or multi-point grounding, at the power side, thereby realizing shutdown protection.

The power conversion circuit includes at least one DC/DC conversion circuit. FIG. 1 to FIG. 3 all show examples of the DC/DC conversion circuit being a BOOST circuit. In practical applications, the DC/DC conversion circuit may be a BOOST circuit, a BUCK-BOOST circuit, a bidirectional two-arm BUCK-BOOST circuit, a bidirectional BOOST-BUCK topology, and the like, which is not limited herein and is determined according to application environments and is within the protection scope of the present disclosure. In addition, the DC/DC conversion circuit may be connected to multiple external DC power supplies through corresponding switches. FIG. 1 to FIG. 3 all show examples of the DC power supply being a photovoltaic string. In practical applications, the DC power supply may be a battery cluster or the like, which is not limited herein.

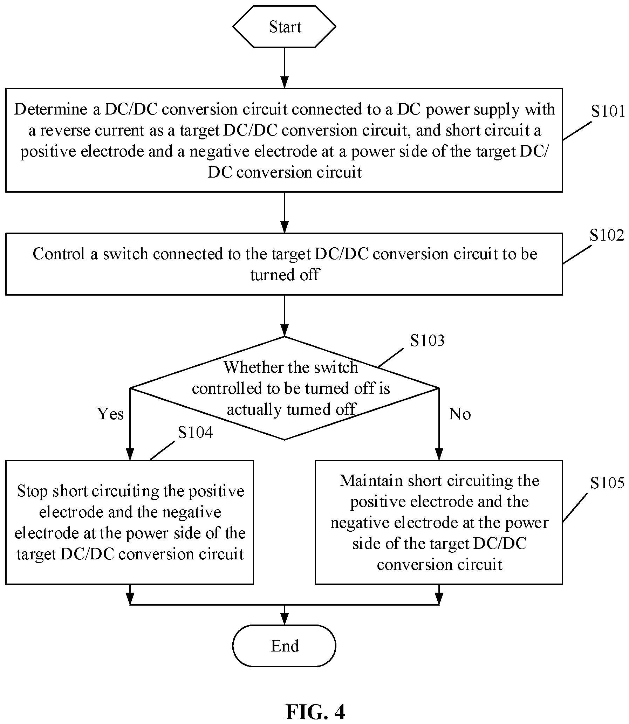

Referring to FIG. 4, the power-side shutdown protection method for a power conversion circuit includes the following steps S101 to S105.

In step S101, a DC/DC conversion circuit connected to a DC power supply with a reverse current is determined as a target DC/DC conversion circuit, and a positive electrode and a negative electrode at a power side of the target DC/DC conversion circuit are short circuited.

The DC power supply with a reverse current, such as the photovoltaic string PV1 shown in FIG. 1, may be determined by detecting currents of the photovoltaic strings. In a case that a reverse current exceeding a protection threshold is detected, the DC power supply corresponding to the reverse current is determined as the DC power supply with a reverse current. In practical applications, it may be determined, based on a signal detected in real time, whether a reverse current having an absolute value greater than a protection threshold exists in currents of the DC power supplies. In a case that the reverse current having the absolute value greater than the protection threshold exists in the currents of the DC power supplies, a DC power supply corresponding to the reverse current is determined as the DC power supply with the reverse current. The protection threshold may be determined according to actual application environments and is not limited herein, as long as the protection threshold may indicate that shutdown protection should be performed on the corresponding DC power supply.

In a case that the power conversion circuit includes only one DC/DC conversion circuit, as long as a DC power supply has a reverse current, the DC/DC conversion circuit is determined as the target DC/DC conversion circuit. In a case that the power conversion circuit includes multiple DC/DC conversion circuits, such as the power conversion circuit of the string photovoltaic inverter including multiple BOOST circuits connected in parallel to the DC side of the DC/AC conversion circuit through a DC bus, a DC/DC conversion circuit connected to a DC power supply with a reverse current is determined as the target DC/DC conversion circuit. For example, in the situation shown in FIG. 1, the BOOST circuit connected to the photovoltaic string PV1 is determined as the target DC/DC conversion circuit.

In practical applications, the positive electrode and the negative electrode at the power side of the target DC/DC conversion circuit may be controlled to be short circuited by: controlling a switching transistor arranged between the positive electrode and the negative electrode at the power side of the target DC/DC conversion circuit to be turned on. For example, the switching transistor Q in the BOOST circuit shown in FIG. 1 may be controlled to be turned on. For a DC/DC conversion circuit with a different topology, other switching transistor may be controlled to be turned on to short circuit the positive electrode and the negative electrode at the power side of the DC/DC conversion circuit, which is not limited herein.

It should be noted that not all the components of the BOOST circuit are shown in FIGS. 1 to 3. For example, in a positive power transmission branch of the BOOST circuit, an inductor is arranged between the switching transistor Q and the power side, and a diode is arranged between the switching transistor Q and the bus side, which may refer to the relational technology and is not repeated herein.

The positive electrode and the negative electrode at the power side of the target DC/DC conversion circuit are short circuited, so that another current circuit is provided for some reverse currents, thereby reducing a turn-off current of a switch connected to the DC power supply with the reverse currents. For example, as shown in FIG. 1, after the switching transistor Q is turned on, the positive electrode and the negative electrode at the power side of the target DC/DC conversion circuit may be short circuited, then a current circuit is provided for the currents of the photovoltaic strings PV3 and PV4. Furthermore, as shown in FIG. 3, turn-off currents of switches S1 and S4 connected to the photovoltaic string PV1 with the reverse current are reduced, then proceed to step S102.

In step S102, a switch connected to the target DC/DC conversion circuit is controlled to be turned off.

The switch connected to the target DC/DC conversion circuit is the switch connected to the power side of the target DC/DC conversion circuit, such as the switches S1 to S4 shown in FIG. 1 to FIG. 3. In practical applications, a DC switch turn-off command may be transmitted for controlling the switches to be turned off.

Since the turn-off current of the switch connected to the target DC/DC conversion circuit has been reduced in step S101, the turn-off risk may be reduced in turning off the corresponding switch. Thus, after turning off the switches, the reverse current may be safely reduced, for example, the currents of the photovoltaic strings PV3 and PV4 shown in FIG. 1 may be avoided.

However, as mentioned above, after transmitting the DC switch turn-off command, the switches may not be actually turned off. For example, abnormal shutdown faults of a DC switch or a driving circuit of the DC switch may affect turning off of the DC switch, resulting in ineffective turning off of the switches in the DC switch. Then, if the switching transistor Q is directly controlled to be turned off, the current circuit at the power side is still remained as shown in FIG. 1, and the risk of damage to the photovoltaic modules still exists. Therefore, it is required to perform the following step S103.

In step S103, it is determined whether the switch controlled to be turned off is actually turned off.

In practical applications, a predetermined feature value may be obtained for directly or indirectly determine a state of a switch. Then, based on the state of the switch, it is determined whether the switch is actually turned off and the operation to be performed on the target DC/DC conversion circuit.

In some embodiments, proceed to step S104 in a case that the switch is actually turned off, and proceed to step S105 in a case that the switch is not actually turned off.

In step S104, the positive electrode and the negative electrode at the power side of the target DC/DC conversion circuit are controlled to stop being short circuited.

In step S105, the positive electrode and the negative electrode at the power side of the target DC/DC conversion circuit are controlled to maintain being short circuited.

Taking the structure shown in FIG. 1 as an example, in a case that it is determined that the switches S1 to S4 controlled to be turned off are actually turned off in response to a DC switch turn-off command, the switching transistor Q in the BOOST circuit may be controlled to switch from a turn-off state to a turn-on state; and in a case that it is determined that at least one of the switches S1 to S4 controlled to be turned off is not actually turned off in response to the DC switch turn-off command, the switching transistor Q in the BOOST circuit maintains the turn-off state, and a small reverse current is maintained. That is, the reverse current is the current of the photovoltaic string PV2, thereby achieving auxiliary protection against reverse current faults and reducing the risk of damage to the photovoltaic modules.

With the power-side shutdown protection method for a power conversion circuit according to the embodiments of the present disclosure, based on the above operations, only in a case of determining the switch controlled to be turned off is actually turned off, the positive electrode and the negative electrode at the power side of the target DC/DC conversion circuit are stopped being short circuited, thereby avoiding not effectively reducing the reverse current after stopping short circuiting the positive electrode and the negative electrode at the power side of the target DC/DC conversion circuit due to the turn-off fault of the switch.

It should be noted that with the power-side shutdown protection method for a power conversion circuit according to the embodiments of the present disclosure, the protection against reverse current at the power side of the target DC/DC conversion circuit can be improved without increasing hardware costs, avoiding the risk of a large reverse current flowing through the DC power supply in a case of a shutdown fault of a switch, and thereby improving the operation reliability of a power station.

For the step S103, various feature values may be determined for determining whether the switch controlled to be turned off is actually turned off, which is not limited. Based on the previous embodiments, in an embodiment, various examples for implementing the step S103 are provided based on different determined feature values. For example, there may be the following four cases for the feature value.

In a first case, the feature value is a current at the power side of the target DC/DC conversion circuit.

As shown in FIG. 1 to FIG. 3, to detect an MPPT (Maximum Power Point Tracking) current of the BOOST circuit, a current sensor CT is generally arranged at the power side of the BOOST circuit. Therefore, the feature value may be determined as a current sampling value of the current sensor CT, that is, the current at the power side of the target DC/DC conversion circuit.

As shown in FIG. 3, after the switching transistor Q in the BOOST circuit is turned on, the BOOST circuit may be considered as a through branch. Moreover, the currents of the photovoltaic strings PV3 and PV4, that originally form a part of the reverse current, form a current loop through the switching transistor Q, and the currents of the corresponding photovoltaic strings are approximately equal to the currents when internal components being short circuited. Thus, the current sensor CT may detect a large DC current.

In a case that corresponding switches are actually turned off, the current path through the switching transistor Q is disconnected. In this case, the MPPT current detected by the current sensor CT rapidly drops to around 0A. In a case that corresponding switches are turned off abnormally, such as the DC switch not being turned off actually, the circuit loop shown in FIG. 3 still exists, and the current sensor CT may still detect a large DC current.

Therefore, after transmitting the DC switch turn-off command, it may be determined whether the MPPT current of the through branch (that is, the current at the power side of the target DC/DC conversion circuit) decreases to a certain threshold range, and then it may be determined whether the switch is actually turned off.

That is, it may be determined whether the switch controlled to be turned off is actually turned off in the step S103 by: determining whether a current at the power side of the target DC/DC conversion circuit is less than a predetermined current value; and determining that the switch controlled to be turned off is actually turned off in a case that the current at the power side of the target DC/DC conversion circuit is less than the predetermined current value.

The predetermined current value may be determined according to actual application environments and is not limited herein, as long as the predetermined current value may indicate that the current at the power side of the target DC/DC conversion circuit is close to or around 0A.

In a second case, the feature value is a current of a DC power supply connected to the switch controlled to be turned off.

As shown in FIG. 1 to FIG. 3, for a string photovoltaic inverter, a current sensor (referred to as a string-side CT for short) is generally arranged at a string side of the string photovoltaic inverter. Therefore, the feature value may be a current sampling value of the string-side CT, that is, the current of the DC power supply connected to the switch controlled to be turned off.

The photovoltaic strings PV2 and PV1 are directly connected in parallel, and the parallel branch of the photovoltaic string PV3 and the photovoltaic string PV4 is connected in parallel with the photovoltaic string PV1 through corresponding switches. In a case that the photovoltaic string PV1 is reversely connected, the parallel branch of the photovoltaic string PV3 and the photovoltaic string PV4 may be referred as a non-reversed branch. The current of the non-reversed branch varies with the states of the switches.

As shown in FIG. 3, after the switching transistor Q in the BOOST circuit is turned on, a current loop is formed through the switching transistor Q. Thus, the current of the string-side CT in the non-reversed branch is approximately equal to a component short-circuit current.

In a case that the switches are actually turned off, the current path of the non-reversed branch is disconnected. In this case, the current detected by the string-side CT in the non-reversed branch rapidly drops to around 0A. In a case that the switches are turned off abnormally, such as the DC switch not being turned off actually, the circuit loop shown in FIG. 3 still exists, and the string-side CT in the non-reversed branch may still detect a large DC current.

Therefore, after transmitting the DC switch turn-off command, it may be determined whether the current of the string-side CT in the non-reversed branch decreases to a certain threshold range, and then it may be determined whether the switch is actually turned off.

That is, it may be determined whether the switch controlled to be turned off is actually turned off in the step S103 by: determining whether an absolute value of at least one current in currents of a DC power supply connected to the switch controlled to be turned off is less than a predetermined current value; and determining that the switch controlled to be turned off is actually turned off in a case that the absolute value of the at least one current in the currents of the DC power supply connected to the switch controlled to be turned off is less than the predetermined current value. As shown in FIG. 3, in the case that the current of the string-side CT in the non-reversed branch decreases to the certain threshold range, an absolute value of at least one current in the currents of the DC power supply connected to the switch controlled to be turned off, such as the current sampling value of the current sensor in the transmission branch of the photovoltaic string PV3, is less than the predetermined current value.

The predetermined current value may be determined according to actual application environments and is not limited herein, as long as the predetermined current value may indicate that the current detected by the string-side CT in the non-reversed branch is close to or around 0A.

In a third case, the feature value is a state signal of the switch controlled to be turned off.

The state signal may be a feedback signal, a temperature monitoring signal or the like for the DC switch. After the switches are actually turned off, a signal may be fed back to the controller. In a case that the DC switch is configured with a feedback signal, the feedback signal varies with the state of the DC switch. In addition, after a switch is actually turned off, the temperature of the switch decreases gradually.

That is, it may be determined whether the switch controlled to be turned off is actually turned off in the step S103 by: determining whether a state signal of the switch controlled to be turned off meets a predetermined turn-off condition; and determining that the switch controlled to be turned off is actually turned off in a case that the state signal of the switch controlled to be turned off meets the predetermined turn-off condition.

In practical applications, in a case that the state signal is the feedback signal, the predetermined turn-off condition is that the feedback signal indicates that the switch operates in a turn-off state. In a case that the state signal is the temperature monitoring signal, the predetermined turn-off condition is that the temperature monitoring signal indicates that a temperature of the switch is lower than a predetermined temperature. For integrating all switches in the DC switch, the switches may share a same feedback signal or a same temperature monitoring signal.

The predetermined temperature may be determined according to actual application environments and is not limited herein, as long as the predetermined temperature may indicate that the switch is actually turned off.

In a fourth case, the feature value is a temperature of the target DC/DC conversion circuit.

As shown in FIG. 3, after the switching transistor Q in the BOOST circuit is turned on, a current loop is formed through the switching transistor Q. A large current flows through the BOOST circuit. In a case that the switches are actually turned off, the current path through the BOOST circuit is disconnected, and the temperature of the BOOST circuit decreases. In a case that the switches are not actually turned off, the temperature of the BOOST circuit remains constant or rises slowly.

Therefore, it may be indirectly determined whether the switches are actually turned off based on a difference of temperatures of the BOOST circuit after transmitting the DC switch turn-off command.

That is, it may be determined whether the switch controlled to be turned off is actually turned off in the step S103 by: determining whether a temperature of the target DC/DC conversion circuit decreases; and determining that the switch controlled to be turned off is actually turned off in a case that the temperature of the target DC/DC conversion circuit decreases.

Based on the above solutions, it may be determined directly or indirectly whether the switch is actually turned off. The feature value for determining whether the switch controlled to be turned off is actually turned off is not limited to the above solutions in which only some examples are provided.

Based on the above embodiments, in an embodiment, the power-side shutdown protection method, after the step S102, further includes: performing the step S103 after a first predetermined time period.

For example, after transmitting the DC switch turn-off command, the feature value is obtained after a time period, and then the state of the DC switch is directly or indirectly determined. The first predetermined time period may be determined according to actual application situations. In an embodiment, the first predetermined time period may be configured to be greater than or equal to a time period for turning off the DC switch after receiving the turn-off command, and less than a time period for the string current decreasing caused by changes of external lighting, thereby improving the accuracy of the determination result.

Furthermore, after the step S101, the step S102 may be performed after a second predetermined time period.

With the second predetermined time period, it may be ensured that the positive electrode and the negative electrode at the power side of the target DC/DC conversion circuit are short circuited.

Taking the situation shown in FIG. 1 as an example, a complete process of the power-side shutdown protection method includes the following operations. On detecting a reverse current exceeding the protection threshold in the photovoltaic strings, the switching transistor Q between the positive electrode and the negative electrode at the power side of the corresponding BOOST circuit is turned on, so that the positive electrode and the negative electrode at the power side of the BOOST circuit are short circuited. After the switching transistor Q is turned on for a time period (that is, after the second predetermined time period), a DC switch turn-off command is transmitted. After a time period (that is, after the first predetermined time period), a feature value is obtained. The state of the switch controlled to be turned off is determined directly or indirectly, and it is determined whether the switch is actually turned off. Then, based on the state of the switch, it is determined whether the positive electrode and the negative electrode at the power side of the BOOST circuit are stopped being short circuited. In a case that it is determined that at least one of switches is not turned off actually based on the DC switch turn-off command, the positive electrode and the negative electrode at the power side of the BOOST circuit are maintained being short circuited, and a small reverse current is maintained. Therefore, the auxiliary protection against reverse current faults is performed, and the risk of damage to the photovoltaic modules is reduced.

For different DC power supplies and power conversion circuits, the auxiliary protection against reverse current faults can still be performed based on the above principle, thereby reducing the risk of damage to the DC power supplies.

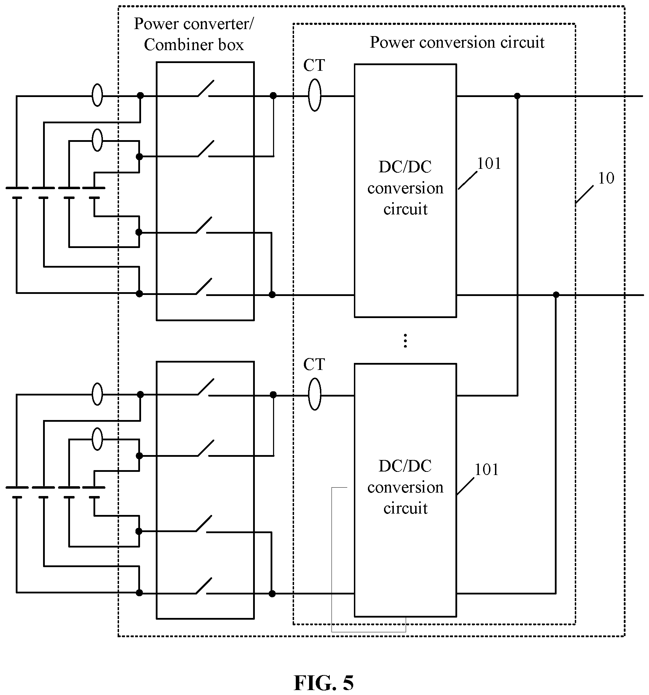

A power converter is further provided according to another embodiment of the present disclosure. As shown in FIG. 5, the power converter includes: a controller (not shown in FIG. 5), a power conversion circuit 10, and multiple switches.

The power conversion circuit 10 includes at least one DC/DC conversion circuit 101. FIG. 5 shows a power conversion circuit 10 including multiple DC/DC conversion circuits 101 as an example.

Each of a positive electrode and a negative electrode at a power side of the DC/DC conversion circuit 101 is connected to at least one switch. FIG. 5 shows a positive electrode and a negative electrode at the power side of the DC/DC conversion circuit 101 connected to two switches respectively as an example.

The other terminal of the switch is connected to a corresponding electrode of at least one DC power supply. The DC power supply may be a photovoltaic string, a battery cluster, and the like, which is not limited herein and is determined according to specific application environments.

The power conversion circuit 10 and the multiple switches are controlled by the controller. The controller is configured to perform the power-side shutdown protection method for a power conversion circuit described in the above embodiments. The detailed process and the principle of the power-side shutdown protection method may refer to the above embodiments, and are not repeated herein.

In practical applications, the DC/DC conversion circuit 101 may be a BOOST circuit, a BUCK-BOOST circuit, a bidirectional two-arm BUCK-BOOST circuit, a bidirectional BOOST-BUCK topology, and the like, which is not limited herein and is determined according to application environments.

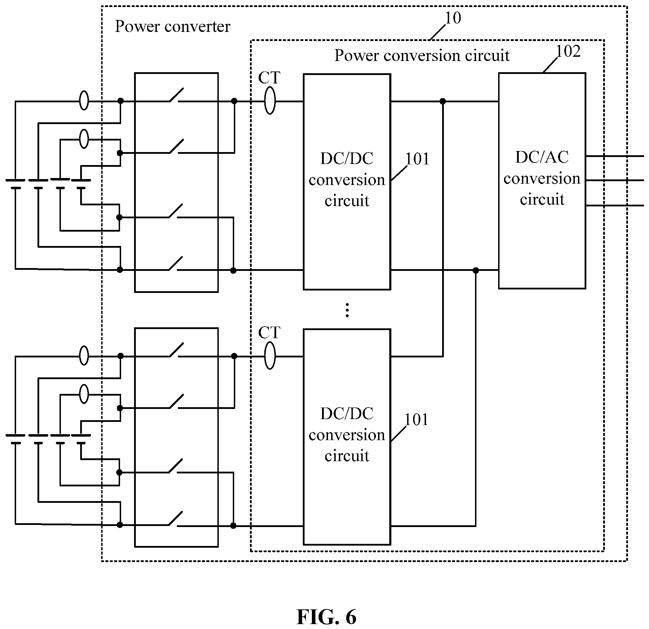

In addition, the power conversion circuit 10 may further include: a DC/AC conversion circuit 102 as shown in FIG. 6. A bus side of the DC/DC conversion circuit 101 is connected to a DC side of the DC/AC conversion circuit 102 through a DC bus. An AC side of the DC/AC conversion circuit 102 may be connected to a power grid and/or a load. The power conversion circuit 10 shown in FIG. 6 may be a main circuit of a string inverter, that is, the power converter may be configured as the string inverter.

It should be noted that FIG. 5 and FIG. 6 only show optional structures of the power converter, which do not limit the structure of the power converter. As long as the power conversion circuit 10 of the power converter includes at least one DC/DC conversion circuit 101, and the controller of the power converter can perform the power-side shutdown protection method described above. Other internal structures of the power converter may refer to the relational technology, which are all within the protection scope of the present disclosure.

With the power-side shutdown protection method for a power conversion circuit according to the present disclosure, the protection against reverse current at the power side of the target DC/DC conversion circuit can be improved without increasing hardware costs, avoiding the risk of a large reverse current flowing through the DC power supply in a case of a shutdown fault of a switch, and thereby improving the operation reliability of a power station.

A combiner box is further provided according to another embodiment of the present disclosure. As shown in FIG. 5, the combiner box includes: a controller (not shown in FIG. 5), a power conversion circuit 10, and multiple switches.

The power conversion circuit 10 includes at least one DC/DC conversion circuit 101. FIG. 5 shows a power conversion circuit 10 including multiple DC/DC conversion circuits 101 as an example. In practical applications, the combiner box may include only one DC/DC conversion circuit 101 or may include two or more DC/DC conversion circuits 101, which is determined according to specific application environments and is within the protection scope of the present disclosure.

Each of a positive electrode and a negative electrode at a power side of the DC/DC conversion circuit 101 is connected to at least one switch. FIG. 5 shows a positive electrode and a negative electrode at the power side of the DC/DC conversion circuit 101 connected to two switches respectively as an example.

The other terminal of the switch is connected to a corresponding electrode of at least one DC power supply. The DC power supply may be a photovoltaic string, a battery cluster, and the like, which is not limited herein and is determined according to specific application environments.

The power conversion circuit 10 and the multiple switches are controlled by the controller. The controller is configured to perform the power-side shutdown protection method for a power conversion circuit described in the above embodiments. The detailed process and the principle of the power-side shutdown protection method may refer to the above embodiments, and are not repeated herein.

In practical applications, the DC/DC conversion circuit 101 may be a BOOST circuit, a BUCK-BOOST circuit, a bidirectional two-arm BUCK-BOOST circuit, a bidirectional BOOST-BUCK topology, and the like, which is not limited herein and is determined according to application environments.

It should be noted that FIG. 5 only shows an optional structure of the combiner box, which do not limit the structure of the combiner box. As long as the power conversion circuit 10 of the combiner box includes at least one DC/DC conversion circuit 101, and the controller of the combiner box can perform the power-side shutdown protection method described above. Other internal structures of the combiner box may refer to the relational technology, which are all within the protection scope of the present disclosure.

With the power-side shutdown protection method for a power conversion circuit according to the present disclosure, the protection against reverse current at the power side of the target DC/DC conversion circuit can be improved without increasing hardware costs, avoiding the risk of a large reverse current flowing through the DC power supply in a case of a shutdown fault of a switch, and thereby improving the operation reliability of a power station.

A power conversion system is further provided according to another embodiment of the present disclosure. The power conversion system includes: at least one power converter; or at least one DC/AC converter and at least one combiner box connected to a DC side of the at least one DC/AC converter. The at least one power converter is the power converter described in the above embodiments. The combiner box is the combiner box described in the above embodiments.

The structures and operation principles of the power converter and the combiner box may refer to the embodiments described above, which are not repeated herein.

Taking the photovoltaic power generation field as an example, the power conversion system may include at least one string inverter or at least one centralized inverter, and a DC side of the centralized inverter may be connected to multiple photovoltaic strings through one or more of the combiner boxes.

In a case that the power conversion system is applied in the field of energy storage, it is required for the power conversion circuit to have a bi-directional conversion function, and the topologies of the relational energy storage converters may be adopted, which is not repeated herein.

Regardless of the specific structure of the power conversion system or the field in which the power conversion system is applied, as long as the power-side shutdown protection method can be performed, the protection against reverse current at the power side of the target DC/DC conversion circuit can be improved without increasing hardware costs and the operation reliability of a power station can be improved, which are all within the protection scope of the present disclosure.

The same or similar parts among the embodiments in this specification may be referred to each other, and each of the embodiments emphasizes differences from other embodiments. In particular, the system or the system embodiments are basically similar to the method embodiments, and therefore are described relatively briefly. For relevant details, reference may be made to the corresponding description of the method embodiments. The system and the system embodiments described above are only illustrative, in which the units described as separate components may or may not be physically separated, and the components shown as units may or may not be physical units, that is, may be located in one place or distributed over multiple network elements. Some or all of the modules may be selected as needed to achieve the object of the solutions of the embodiments. Those skilled in the art can understand and implement the solutions without any creative effort.

Those skilled in the art may further realize that the units and algorithm steps in each of the examples described in conjunction with the embodiments disclosed herein can be implemented by electronic hardware, computer software, or a combination of both. In order to clearly illustrate the interchangeability of hardware and software, the modules and steps of each of the examples have been described in general terms of functionality in the above description. Whether these functions are performed in hardware or software depends on the specific applications and design constraints of the technical solutions. Those skilled in the art may implement the described functions in various manners for each specific application, while such implementations should not be considered to be beyond the scope of the present disclosure.

Based on the above description of the disclosed embodiments, the features described in the different embodiments in this specification may be replaced or combined with each other, so that those skilled in the art can implement or use the present disclosure. Various modifications to these embodiments will be apparent by those skilled in the art, and the generic principles defined herein may be implemented in other embodiments without departing from the spirit or scope of the present disclosure. Hence, the present disclosure is not limited to the embodiments disclosed herein, but shall conform to the widest scope in accordance with the principle and novel features disclosed herein.

## Claims

1. A power-side shutdown protection method for a power conversion circuit, comprising:
determining a direct-current/direct-current (DC/DC) conversion circuit connected to a DC power supply with a reverse current as a target DC/DC conversion circuit, and short circuiting a positive electrode and a negative electrode at a power side of the target DC/DC conversion circuit, wherein DC/DC conversion circuits in the power conversion circuit are connected to a plurality of external DC power supplies through corresponding switches;
controlling a switch connected to the target DC/DC conversion circuit to be turned off;
determining whether the switch controlled to be turned off is actually turned off; and
stopping short circuiting the positive electrode and the negative electrode at the power side of the target DC/DC conversion circuit in a case that the switch is actually turned off.

2. The power-side shutdown protection method for a power conversion circuit according to claim 1, wherein the determining whether the switch controlled to be turned off is actually turned off comprises:
determining whether a current at the power side of the target DC/DC conversion circuit is less than a predetermined current value; and
determining that the switch controlled to be turned off is actually turned off in a case that the current at the power side of the target DC/DC conversion circuit is less than the predetermined current value.

3. The power-side shutdown protection method for a power conversion circuit according to claim 1, wherein the determining whether the switch controlled to be turned off is actually turned off comprises:
determining whether an absolute value of at least one current in currents of a DC power supply connected to the switch controlled to be turned off is less than a predetermined current value; and
determining that the switch controlled to be turned off is actually turned off in a case that the absolute value of the at least one current in the currents of the DC power supply connected to the switch controlled to be turned off is less than the predetermined current value.

4. The power-side shutdown protection method for a power conversion circuit according to claim 1, wherein the determining whether the switch controlled to be turned off is actually turned off comprises:
determining whether a state signal of the switch controlled to be turned off meets a predetermined turn-off condition; and
determining that the switch controlled to be turned off is actually turned off in a case that the state signal of the switch controlled to be turned off meets the predetermined turn-off condition.

5. The power-side shutdown protection method for a power conversion circuit according to claim 4, wherein
the state signal is a feedback signal; and
the predetermined turn-off condition is that the feedback signal indicates that the switch operates in a turn-off state.

6. The power-side shutdown protection method for a power conversion circuit according to claim 4, wherein
the state signal is a temperature monitoring signal; and
the predetermined turn-off condition is that the temperature monitoring signal indicates that a temperature of the switch is lower than a predetermined temperature.

7. The power-side shutdown protection method for a power conversion circuit according to claim 1, wherein the determining whether the switch controlled to be turned off is actually turned off comprises:
determining whether a temperature of the target DC/DC conversion circuit decreases; and
determining that the switch controlled to be turned off is actually turned off in a case that the temperature of the target DC/DC conversion circuit decreases.

8. The power-side shutdown protection method for a power conversion circuit according to any one of claims 1 to 7, wherein the short circuiting a positive electrode and a negative electrode at a power side of the target DC/DC conversion circuit comprises:
controlling a switching transistor arranged between the positive electrode and the negative electrode at the power side of the target DC/DC conversion circuit to be turned on.

9. The power-side shutdown protection method for a power conversion circuit according to any one of claims 1 to 7, wherein before short circuiting the positive electrode and the negative electrode at the power side of the target DC/DC conversion circuit, the method further comprises:
determining whether a reverse current having an absolute value greater than a protection threshold exists in currents of the DC power supplies; and
determining a DC power supply corresponding to the reverse current as the DC power supply with the reverse current in a case that the reverse current having the absolute value greater than the protection threshold exists in the currents of the DC power supplies.

10. The power-side shutdown protection method for a power conversion circuit according to any one of claims 1 to 7, wherein after controlling the switch connected to the target DC/DC conversion circuit to be turned off, the method further comprises:
determining, after a first predetermined time period, whether the switch controlled to be turned off is actually turned off.

11. The power-side shutdown protection method for a power conversion circuit according to any one of claims 1 to 7, wherein after short circuiting the positive electrode and the negative electrode at the power side of the target DC/DC conversion circuit, the method further comprises:
controlling, after a second predetermined time period, the switch connected to the target DC/DC conversion circuit to be turned off.

12. The power-side shutdown protection method for a power conversion circuit according to any one of claims 1 to 7, wherein after determining whether the switch controlled to be turned off is actually turned off, the method further comprises:
maintaining short circuiting the positive electrode and the negative electrode at the power side of the target DC/DC conversion circuit in a case that the switch controlled to be turned off is not actually turned off.

13. A power converter, comprising: a controller, a power conversion circuit, and a plurality of switches, wherein
the power conversion circuit comprises at least one direct-current/direct-current (DC/DC) conversion circuit;
each of a positive electrode and a negative electrode at a power side of the DC/DC conversion circuit is connected to one terminal of at least one switch, and the other terminal of the switch is configured to be connected to a corresponding electrode of at least one DC power supply;
the power conversion circuit and the plurality of switches are configured to be controlled by the controller; and
the controller is configured to perform the power-side shutdown protection method for a power conversion circuit according to any one of claims 1 to 12.

14. The power converter according to claim 13, wherein
the power conversion circuit further comprises a direct-current/alternating-current (DC/AC) conversion circuit; and
a bus side of the DC/DC conversion circuit is connected to a DC side of the DC/AC conversion circuit through a DC bus.

15. A combiner box, comprising: a controller, a power conversion circuit, and a plurality of switches, wherein
the power conversion circuit comprises at least one direct-current/direct-current (DC/DC) conversion circuit;
each of a positive electrode and a negative electrode at a power side of the DC/DC conversion circuit is connected to one terminal of at least one switch, and the other terminal of the switch is configured to be connected to a corresponding electrode of at least one DC power supply;
the power conversion circuit and the plurality of switches are configured to be controlled by the controller; and
the controller is configured to perform the power-side shutdown protection method for a power conversion circuit according to any one of claims 1 to 12.

16. A power conversion system, comprising:
at least one power converter; or
at least one direct-current/alternating-current (DC/AC) converter, and at least one combiner box connected to a DC side of the at least one DC/AC converter, wherein
the at least one power converter is the power converter according to claim 13 or 14; and
the combiner box is the combiner box according to claim 15.
